# EUROPEAN PATENT SPECIFICATION

(11) **EP 3 817 969 B1**
(45) Date of publication and mention of the grant of the patent: **09.08.2023**
(21) Application number: 19748960.2
(22) Date of filing: 05.07.2019
(51) Int. Cl.: B62J 6/165, B62J 6/04, B62J 6/24, B62J 6/00

(54) **SADDLE RIDING TYPE VEHICLE COMPRISING AN AUXILIARY LIGHTING DEVICE**
SATTELFAHRZEUG MIT EINER ZUSATZBELEUCHTUNG
VÉHICULE DE TYPE À SELLE COMPRENANT UN DISPOSITIF D'ÉCLAIRAGE AUXILIAIRE

(30) Priority: 05.07.2018 IT 201800006951
(43) Date of publication of application: 12.05.2021
(73) Proprietor: Piaggio & C. SpA, 56025 Pontedera (IT)
(72) Inventor: ANGIOLINI, Gionatan, 56025 Pontedera (Pisa) (IT); SISI, Alessio, 56025 Pontedera (Pisa) (IT)
(74) Representative: Carangelo, Pierluigi
(86) International application number: PCT/IB2019/055748
(87) International publication number: WO 2020/008426

(56) References cited:
- EP-A2- 2 236 403
- WO-A1-2018/002749
- JP-A- 2012 201 256
- JP-U- S60 293

## Description

### TECHNICAL FIELD OF THE INVENTION

The present invention relates the technical field of land transport vehicles and relates, in particular, to a saddle riding type vehicle comprising an auxiliary lighting device.

### BACKGROUND OF THE INVENTION

For a long time now, on board saddle riding type vehicles, such as, for example, motorcycles, lighting systems allowing the safe use of the motorcycles themselves have been employed. Motorcycles are in fact equipped with a headlight, a rear light, indicator lights, etc. The headlight allows lighting an area of land placed in front of the motorcycle and making the motorcycle visible to people or vehicles placed in front of the motorcycle. The rear light allows making the motorcycle visible to people or vehicles placed behind the motorcycle and signaling the activation of the brake system.

Among the possible types of saddle riding type vehicles, there are vehicles, such as, for example, some motorcycles, which comprise, between the front axle and the rear axle, a feet platform on which the driver may comfortably rest their feet while the vehicle is in motion.

In addition to performing the function of supporting the driver's feet, the feet platform also performs the additional functions of representing a useful space for housing a fuel tank filler and/or of being used as a support surface also for items that the driver intends to transport on board the vehicle. In case the saddle riding type vehicle is an electric or hybrid vehicle, an electrical recharge socket may be provided on the feet platform, as an alternative, or in addition, to the fuel tank filler.

However, the use of the aforesaid additional functions of the feet platform, in the vehicles of the background art, may at least partially be compromised in conditions of poor ambient lighting and this may, in turn, compromise the safety of the driver and/or of the drivers of other vehicles. Document WO 2018/002749 shows a known saddle riding type vehicle comprising:
- a main body extending along a longitudinal axis and having a front part, a tail part and a central part comprised between the front part and the tail part, wherein the central part comprises a feet platform for supporting a driver's feet;
- at least a front wheel and at least a rear wheel;
- an engine operatively connected to at least one of said wheels;
- at least one headlight fixed to the front part;
- at least one rear light fixed to the tail part; wherein said saddle riding type vehicle further comprises an auxiliary lighting device fixed to the main body and adapted to be electrically controlled in order to be activated and deactivated, wherein the auxiliary lighting device is arranged and oriented so that, when activated, it lights said the ground portion or the kickstand.

It is the object of the present description to provide a saddle riding type vehicle which is capable of overcoming, at least partially, the drawbacks described above with reference to the vehicles of the background art.

Such an object is achieved by means of a saddle riding type vehicle as generally defined in the appended claim 1. Preferred and advantageous embodiments of the aforesaid vehicle are defined in the accompanying dependent claims.

The invention will be better understood from the following detailed description of particular embodiments thereof, made by way of explanation and, therefore, by no means, by way of limitation, in relation to the accompanying drawings, synthetically described below.

### BRIEF DESCRIPTION OF THE DRAWINGS

Figure 1 shows a side plane view of an embodiment, given by way of explanation and not by way of limitation, of a saddle riding type vehicle comprising an auxiliary lighting device.
Figure 2 shows a plan view of the saddle riding type vehicle of Figure 1 in a first embodiment.
Figure 3 shows a plan view of the saddle riding type vehicle of Figure 1 in a second embodiment.
Figure 4 shows a functional block diagram of an exemplary embodiment of an electronic control system of the saddle riding type vehicle of Figure 1 and of Figure 3.

### DETAILED DESCRIPTION

In the accompanying Figures, the same or similar elements have been indicated with the same reference numerals.

The accompanying Figures show an embodiment of a saddle riding type vehicle 1 which, in the particular example shown, takes the form, without however introducing any limitation, of a two-wheeled motorcycle and in particular of a two-wheeled scooter having a front wheel 6 and a rear wheel 7.

Henceforth, in the present description reference will be made to a generic motorcycle 1, thereby meaning that the description of the following is generally applicable to any type of saddle riding type vehicle comprising:
- a main body 2, 3, 4;
- at least two wheels 6, 7 constrained to the main body 2, 3, 4;
- an engine 8, for example a thermal or electric or hybrid traction engine, constrained to the main body 2, 3, 4 and operatively connected, directly or indirectly, to at least one of the two wheels 6, 7.

The main body 2, 3, 4 of the motorcycle 1 extends along a longitudinal axis L-L, which is parallel to the axis of motion of the motorcycle 1, and has a front part 2, a tail part 4 and a central part 3 comprised between the front part 2 and the tail part 4. The central part 3 comprises a feet platform 5.

Conveniently, the motorcycle 1, and in particular the tail part 4, comprises a saddle 41 and a support part 43 of the saddle 41 and the feet platform 5 connects the support part 43 of the saddle 41 to the front part 2 of the motorcycle 1.

In the example, the front part 2 comprises a front shield 21, a steering handlebar 22, the front wheel 6, a front fender 26, a front suspension 25.

In the example, the rear part 4 comprises a luggage rack 42, a rear suspension 45, the rear wheel 7, the traction engine 8, a rear fender 44, an exhaust terminal 46.

The motorcycle 1 comprises at least one headlight 12 fixed to the front part 2 and at least one rear light 14 fixed to the tail part 4. In a situation in which the steering handlebar 22 is not rotated, i.e. in the condition in which both the front wheel 6 and the rear one 7 are aligned along the longitudinal axis L-L, the headlight 12 is such that it emits a light beam mainly directed along the longitudinal axis L-L to light a portion of land placed at the front with respect to the motorcycle 1. The rear light 14 is such that it emits a diffused, i.e., non-directional, optical radiation.

The motorcycle 1 further comprises an auxiliary lighting device 15, for example, fixed to the main body 2, 3, 4 and adapted to be electrically controlled in order to be activated and deactivated, wherein the auxiliary lighting device 15 is arranged and oriented so that, when activated, it is such as to light the feet platform 5.

In accordance with an advantageous embodiment, the auxiliary lighting device 15 is arranged and oriented so that, when activated, it is such that it selectively lights the feet platform 5. For the purposes of the present description, "selectively" means "mainly" or "exclusively". In other words, the light beam generated by the auxiliary lighting device 15 mainly lights the area of the feet platform 5, as described in detail below.

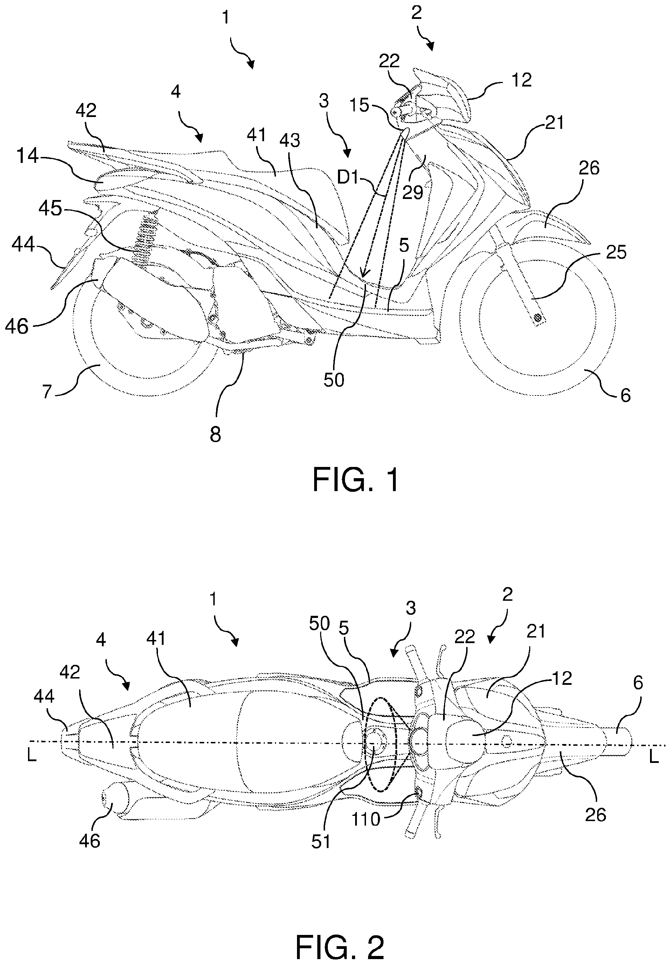

Preferably, the auxiliary lighting device 15 is such that it emits a light beam with an optical axis of main emission D1 oriented towards the feet platform 5. This may be achieved by using, in the auxiliary lighting device 15, a directive optical source, such as, for example, a LED, and/or by using an optical, for example, comprising at least one lens and/or at least one reflector capable of spatially concentrating the optical radiation emitted by a non-directive optical source, such as, for example, an incandescent or halogen lamp. In Figures 1, 2 and 3, the light beam emitted by the auxiliary lighting device 15 has been diagrammatically represented by means of dashed lines delimiting it.

In accordance with an advantageous embodiment, the auxiliary lighting device 15 is mounted on the front part 2 of the motorcycle 1. For example, the auxiliary lighting device 15 comprises at least one optical source mounted on the steering handlebar 22. In accordance with an alternative embodiment, it is however possible to provide that the auxiliary lighting device 15 is mounted on the front shield 21, for example, on an intrados wall thereof or on the steering tube 29.

The arrangement of the auxiliary lighting device 15 on the front part, and, in particular, on the steering handlebar 22, allows taking advantage of an advantageous position, being substantially cantilevered with respect to the line of the front shield 21 of the vehicle. Thereby, the light beam is directed in a uniform manner on the feet platform 5, avoiding, for example, that the emitted light beam hits the front shield from the internal part, thus losing illuminating power, or, also, avoiding reflections from being created which are annoying for the driver.

In addition, the arrangement of the auxiliary lighting device 15 on the front part, and, in particular, on the steering handlebar 22, allows sharing the power supply devices and the wiring already present for the headlight 12, thus simplifying the installation and reducing costs.

Furthermore, as an alternative, the auxiliary lighting device 15 is mounted on the opposite part with respect to the steering tube 29, for example, in the part of the fairing which is comprised between the feet platform 5 and the saddle 41 of the vehicle, for example on the support part 43 of the saddle 41. Also in this case, the end part of the saddle 41 is cantilevered with respect to the feet platform 5 so as to allow orienting the light beam precisely and directly on the feet platform 5.

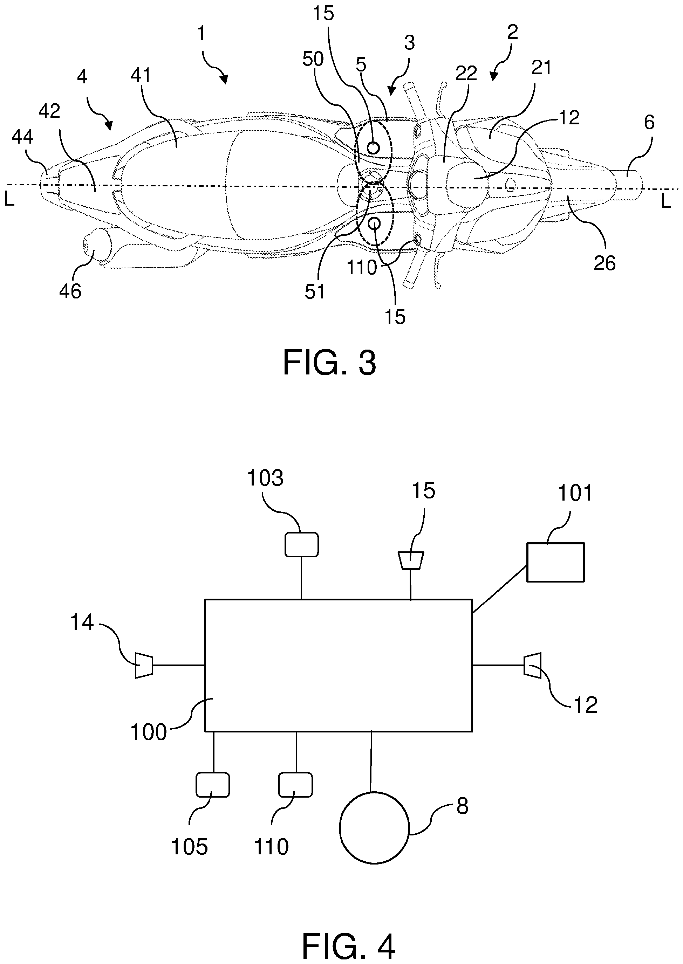

In a further alternative, as shown in Figure 3, the auxiliary lighting device 15 is mounted recessed into the feet platform 5, so that the emitted light beam is directed towards the front shield 21 and/or towards the saddle 41. In this case, the auxiliary lighting device 15 is such as to light the feet platform 5 with an indirect and diffused light. More particularly, the emitted light beam has an optical axis of main emission which originates from the feet platform 5 and is diffused to light the central part 3 of the vehicle.

In accordance with an advantageous embodiment, the auxiliary lighting device 15 comprises adjustment means which allow adjusting the orientation of the emitted optical beam, i.e., to adjust the direction of the optical axis of the emitted beam, without prejudice to preferably keeping the possibility of orientation limited, so that the lighting device 15 in any case mainly lights the feet platform 15 in the various possible orientations of the beam. For example, the aforesaid adjustment means comprise means which allow the lighting device 15 to be rotatably or slidably fixed to the main body 2, 3, 4, for example, a cylindrical hinge adapted to rotate the lighting device or part thereof about a horizontal axis or a track which allows the lighting device 15 to be slidably constrained to the main body 2, 3, 4 of the motorcycle 1 in order to be able to slide with respect to said body along a sliding axis.

In accordance with a further embodiment, given alternatively to or cumulatively with the one described in the previous paragraph, the lighting device 15 comprises means which allow adjusting the collimation of the emitted light beam, such as, for example, a lens slidable with respect to a sliding axis, for example, a lens fixed to a ferrule rotatable about the sliding axis. Thereby, for example, it is advantageously possible to select the area of main lighting of the platform, for example, to concentrate the beam to a greater extent on the tank filler 51 (and/or on the electrical recharge socket 51) when required, i.e., mainly during the refueling and/or electrical recharging operations, and to widen the light beam over an area larger than the feet platform alone.

In accordance with an advantageous embodiment, the motorcycle 1 comprises two lighting devices 15 spaced apart from each other, each adapted to mainly light a respective part of the feet platform 5, said parts being, for example, arranged on parts mutually opposite with respect to the axis of longitudinal extension L-L. For example, the aforesaid two lighting devices 15 are mounted on the main body 2, 3, 4 so as to be arranged on parts mutually opposite with respect to the longitudinal axis L-L.

In accordance with a preferred embodiment, the feet platform 5 comprises an upper surface and an opposite lower surface and the auxiliary lighting device 15 is arranged and oriented so that, when activated, it mainly lights said upper surface of the feet platform 5.

In accordance with an advantageous embodiment, the motorcycle 1 comprises an electronic control unit 100 operatively connected to the auxiliary lighting device 15 to activate and deactivate it. For example, the electronic control unit 100, as well as the auxiliary lighting device 15, is powered by a battery 101 of the motorcycle 1.

In accordance with a non-limiting embodiment, the electronic control unit 100 is the Engine Control Unit (ECU) of the motorcycle 1 and is such as to also control the traction engine 8 of the motorcycle 1.

In particular, the vehicle 1 comprises a fuel tank filler 51 and/or an electrical recharge socket 51 and the auxiliary lighting device 15 is adapted and configured to light the fuel tank filler 51 and/or the electrical recharge socket together with the feet platform.

In accordance with a particularly advantageous embodiment, the feet platform 5 comprises a central tunnel 50 and the motorcycle 1 comprises a fuel tank filler 51 and/or an electrical recharge socket 51. In such embodiment, the auxiliary lighting device 15 is adapted and configured to mainly light the fuel tank filler 51 and/or the electrical recharge socket 51. More advantageously, the fuel tank filler 51 and/or the electrical recharge socket 51 comprise a door that can be opened and closed and wherein said electronic control unit 100 is adapted and configured to detect whether said door is closed or opened and to automatically activate said auxiliary lighting device 15 when said door is opened.

In accordance with an embodiment, the motorcycle 1 comprises a manual control device 110, such as, for example, a lever switch or an axial or toggle button switch, operatively connected to the electronic control unit 100 and adapted and configured to allow the driver to activate and deactivate the auxiliary lighting device 15. For example, the manual control device 110 is mounted on the steering handlebar 22.

In accordance with a particularly advantageous embodiment, the motorcycle 1 comprises a twilight sensor 105 operatively connected to the electronic control unit 100 and the electronic control unit 100 is programmed and configured to keep the auxiliary lighting device 15 deactivated when detecting, by means of the twilight sensor 105, a certain degree of ambient lighting.

In accordance with a further embodiment, the motorcycle 1 further comprises a wireless interface 103, such as, for example, a radio interface, operatively connected to the electronic control unit 100. The electronic control unit 100 is programmed and configured to activate the auxiliary lighting device 15 based on at least one signal received by said wireless interface 103. Thereby, it will be advantageously possible to use the auxiliary lighting device 15 also to allow the authorized user of the motorcycle 1 to identify the parking position of the motorcycle 1 in the dark from a certain distance. The aforesaid wireless interface 103 is, for example, an interface adapted and configured to allow operatively connecting the electronic control unit 100 to a portable wireless device for authorizing the use of the motorcycle 1, such as, for example, a remote control of an anti-theft device and/or a radio key.

On the basis of what has been described above, it is therefore possible to understand how a saddle riding type vehicle 1 of the type described above allows achieving the aforementioned objects with reference to the background art.

In fact, by virtue of the provision of the auxiliary lighting device 15 it is possible to make use of the additional functions of the feet platform 5 described above, even in conditions of poor ambient lighting or in the dark, increasing the comfort of use of the motorcycle 1 and in some cases also increasing the safety of the driver.

It should be noted that the aforesaid auxiliary lighting device 15 may be supplied already installed on board new vehicles, by default or as an option, or as an accessory to be installed subsequently, for example, as a customization accessory.

Finally, it is also possible to provide for the auxiliary lighting device 15 to be supplied already coupled to a steering handlebar 22, so as to provide a handlebar assembly which already includes the auxiliary lighting device 15 integrated in the steering handlebar 22.

Without prejudice to the principle of the invention, the embodiments and embodiment details may be widely varied with respect to what has been described and shown purely by way of non-limiting example, without departing from the scope of the invention as defined in the accompanying claims.

## Claims

1. A saddle riding type vehicle (1) comprising:
- a main body (2, 3, 4) extending along a longitudinal axis (L-L) and having a front part (2), a tail part (4) and a central part (3) comprised between the front part (2) and the tail part (4), wherein the central part (3) comprises a feet platform (5) for supporting a driver's feet;
- at least a front wheel (6) and at least a rear wheel (7);
- an engine (8) operatively connected to at least one of said wheels (6, 7);
- at least one headlight (12) fixed to the front part (2);
- at least one rear light (14) fixed to the tail part (4);
wherein said saddle riding type vehicle (1) further comprises an auxiliary lighting device (15) fixed to the main body (2, 3, 4) and adapted to be electrically controlled in order to be activated and deactivated, wherein the auxiliary lighting device (15) is arranged and oriented so that, when activated, it lights said feet platform (5), wherein said vehicle (1) comprises a fuel tank filler (51) and/or an electrical recharge socket (51) and wherein said auxiliary lighting device (15) is adapted and configured to light said fuel tank filler (51) and/or said electrical recharge socket (51);
wherein the auxiliary lighting device (15) is mounted on a front shield (21), being in a position substantially cantilevered with respect to the line of said front shield (21) of the saddle riding type vehicle.

2. A saddle riding type vehicle (1) according to claim 1, wherein said feet platform (5) comprises an upper surface and a lower surface opposite to said upper surface, and wherein said auxiliary lighting device (15) is arranged and oriented so that, when activated, it lights said upper surface.

3. A saddle riding type vehicle (1) according to any one of the preceding claims, wherein the auxiliary lighting device (15) has a main emission optical axis (D1) oriented towards said feet platform (5).

4. A saddle riding type vehicle (1) according to any one of the preceding claims, comprising an electronic control unit (100) operatively connected to the auxiliary lighting device (15) in order to activate and deactivate it.

5. A saddle riding type vehicle (1) according to claim 4, further including a twilight sensor (105) operatively connected to the electronic control unit (100) and wherein the electronic control unit (100) is programmed and configured to keep the auxiliary lighting device (15) deactivated when detecting a certain degree of ambient lighting.

6. A saddle riding type vehicle (1) according to any one of the preceding claims, wherein the fuel tank filler (51) and/or the electrical recharge socket (51) comprises a door that can be opened and closed and wherein said electronic control unit (100) is adapted and configured to detect whether said door is opened or closed and to automatically activate said auxiliary lighting device (15) when said door is opened.

7. A saddle riding type vehicle (1) according to claim 4, wherein said vehicle (1) comprises a wireless interface (103) operatively connected to said electronic control unit (100) and wherein said electronic control unit (100) is programmed and configured for activating the auxiliary lighting device (15) based on at least a signal provided by said wireless interface (103).

8. A saddle riding type vehicle (1) according to any one of the preceding claims, wherein said saddle riding type vehicle (1) is a motorcycle.

9. A saddle riding type vehicle (1) according to claim 8, wherein said motorcycle is a scooter.

## Patentansprüche

1. Sattelfahrzeug (1), umfassend:
- einen Hauptkörper (2, 3, 4), der sich entlang einer Längsachse (L-L) erstreckt und ein Vorderteil (2), ein Heckteil (4) und ein Mittelteil (3) aufweist, das zwischen dem Vorderteil (2) und dem Heckteil (4) umfasst ist, wobei das Mittelteil (3) eine Fußplattform (5) zum Abstützen der Füße des Fahrers umfasst;
- mindestens ein Vorderrad (6) und mindestens ein Hinterrad (7);
- einen Motor (8), der mit mindestens einem der Räder (6, 7) wirkverbunden ist;
- mindestens einen Scheinwerfer (12), der an dem Vorderteil (2) befestigt ist;
- mindestens eine Rückleuchte (14), die an dem Heckteil (4) befestigt ist;
wobei das Sattelfahrzeug (1) ferner eine Zusatzbeleuchtung (15) umfasst, die an dem Hauptkörper (2, 3, 4) befestigt ist und eingerichtet ist, um elektrisch gesteuert zu werden, um aktiviert und deaktiviert zu werden, wobei die Zusatzbeleuchtung (15) derart angeordnet und ausgerichtet ist, dass sie, wenn sie aktiviert ist, die Fußplattform (5) beleuchtet, wobei das Fahrzeug (1) einen Kraftstofftankeingang (51) und/oder eine elektrische Aufladebuchse (51) umfasst und wobei die Zusatzbeleuchtung (15) eingerichtet und konfiguriert ist, um den Kraftstofftankeingang (51) und/oder die elektrische Aufladebuchse (51) zu beleuchten;
wobei die Zusatzbeleuchtung (15) an einem vorderen Schild (21) angebracht ist und sich in einer Position befindet, die in Bezug auf die Linie des vorderen Schildes (21) des Sattelfahrzeugs im Wesentlichen auskragend ist.

2. Sattelfahrzeug (1) nach Anspruch 1, wobei die Fußplattform (5) eine obere Fläche und eine der oberen Fläche gegenüberliegende untere Fläche umfasst, und wobei die Zusatzbeleuchtung (15) derart angeordnet und ausgerichtet ist, dass sie, wenn sie aktiviert ist, die obere Fläche beleuchtet.

3. Sattelfahrzeug (1) nach einem der vorhergehenden Ansprüche, wobei die Zusatzbeleuchtung (15) eine optische Hauptstrahlachse (D1) aufweist, die auf die Fußplattform (5) ausgerichtet ist.

4. Sattelfahrzeug (1) nach einem der vorhergehenden Ansprüche, das eine elektronische Steuereinheit (100) umfasst, die mit der Zusatzbeleuchtung (15) wirkverbunden ist, um sie zu aktivieren und zu deaktivieren.

5. Sattelfahrzeug (1) nach Anspruch 4, das ferner einen Dämmerungssensor (105) enthält, der mit der elektronischen Steuereinheit (100) wirkverbunden ist, und wobei die elektronische Steuereinheit (100) programmiert und konfiguriert ist, um die Zusatzbeleuchtung (15) deaktiviert zu halten, wenn ein bestimmter Grad an Umgebungsbeleuchtung erkannt wird.

6. Sattelfahrzeug (1) nach einem der vorhergehenden Ansprüche, wobei der Kraftstofftankeingang (51) und/oder die elektrische Aufladebuchse (51) eine Klappe umfasst, die geöffnet und geschlossen werden kann, und wobei die elektronische Steuereinheit (100) eingerichtet und konfiguriert ist, um zu erkennen, ob die Klappe geöffnet oder geschlossen ist, und um die Zusatzbeleuchtung (15) automatisch zu aktivieren, wenn die Klappe geöffnet ist.

7. Sattelfahrzeug (1) nach Anspruch 4, wobei das Fahrzeug (1) eine drahtlose Schnittstelle (103) umfasst, die mit der elektronischen Steuereinheit (100) wirkverbunden ist, und wobei die elektronische Steuereinheit (100) programmiert und konfiguriert ist, um die Zusatzbeleuchtung (15) auf der Grundlage von mindestens einem von der drahtlosen Schnittstelle (103) bereitgestellten Signal zu aktivieren.

8. Sattelfahrzeug (1) nach einem der vorhergehenden Ansprüche, wobei das Sattelfahrzeug (1) ein Motorrad ist.

9. Sattelfahrzeug (1) nach Anspruch 8, wobei das Motorrad ein Motorroller ist.

## Revendications

1. Véhicule de type à selle (1) comprenant :
- une carrosserie principale (2, 3, 4) s'étendant le long d'un axe longitudinal (L-L) et ayant une partie avant (2), une partie arrière (4) et une partie centrale (3) disposée entre la partie avant (2) et la partie arrière (4), dans lequel la partie centrale (3) comprend une plateforme pour les pieds (5) destinée à supporter les pieds d'un conducteur ;
- au moins une roue avant (6) et au moins une roue arrière (7) ;
- un moteur (8) relié fonctionnellement à au moins l'une desdites roues (6, 7) ;
- au moins un phare (12) fixé à la partie avant (2) ;
- au moins un feu arrière (14) fixé à la partie arrière (4) ;
dans lequel ledit véhicule de type à selle (1) comprend en outre un dispositif d'éclairage auxiliaire (15) fixé au corps principal (2, 3, 4) et apte à être électriquement commandé afin d'être activé et désactivé, dans lequel le dispositif d'éclairage auxiliaire (15) est agencé et orienté de sorte que, lorsqu'il est activé, il éclaire ladite plateforme pour les pieds (5), dans lequel ledit véhicule (1) comprend un remplissage de réservoir de carburant (51) et/ou une prise de recharge électrique (51) et dans lequel ledit dispositif d'éclairage auxiliaire (15) est apte à et configuré pour éclairer ledit bouchon de réservoir de carburant (51) et/ou ladite prise de recharge électrique (51) ;
dans lequel le dispositif d'éclairage auxiliaire (15) est monté sur une protection avant (21), qui est dans une position sensiblement en porte-à-faux par rapport à la ligne de ladite protection avant (21) du véhicule de type à selle.

2. Véhicule de type à selle (1) selon la revendication 1, dans lequel ladite plateforme pour les pieds (5) comprend une surface supérieure et une surface inférieure opposée à ladite surface supérieure et dans lequel ledit dispositif d'éclairage auxiliaire (15) est agencé et orienté de sorte que, lorsqu'il est activé, il éclaire ladite surface supérieure.

3. Véhicule de type à selle (1) selon l'une quelconque des revendications précédentes, dans lequel le dispositif d'éclairage auxiliaire (15) a un axe optique d'émission principal (D1) orienté vers ladite plateforme pour les pieds (5).

4. Véhicule de type à selle (1) selon l'une quelconque des revendications précédentes, comprenant une unité de commande électronique (100) reliée fonctionnellement au dispositif d'éclairage auxiliaire (15) afin de l'activer et le désactiver.

5. Véhicule de type à selle (1) selon la revendication 4, comportant en outre un capteur crépusculaire (105) relié fonctionnellement à l'unité de commande électronique (100) et dans lequel l'unité de commande électronique (100) est programmée et configurée pour maintenir le dispositif d'éclairage auxiliaire (15) désactivé lors de la détection d'un certain degré d'éclairage ambiant.

6. Véhicule de type à selle (1) selon l'une quelconque des revendications précédentes, dans lequel le remplissage de réservoir de carburant (51) et/ou la prise de recharge électrique (51) comprend une porte qui peut être ouverte et fermée et dans lequel ladite unité de commande électronique (100) est apte à et configurée pour détecter si ladite porte est ouverte ou fermée et pour activer automatiquement ledit dispositif d'éclairage auxiliaire (15) lorsque ladite porte est ouverte.

7. Véhicule de type à selle (1) selon la revendication 4, dans lequel ledit véhicule (1) comprend une interface sans fil (103) reliée fonctionnellement à ladite unité de commande électronique (100) et dans lequel ladite unité de commande électronique (100) est programmée et configurée pour activer le dispositif d'éclairage auxiliaire (15) sur la base d'au moins un signal fourni par ladite interface sans fil (103).

8. Véhicule de type à selle (1) selon l'une quelconque des revendications précédentes, dans lequel ledit véhicule de type à selle (1) est une motocyclette.

9. Véhicule de type à selle (1) selon la revendication 8, dans lequel ladite motocyclette est un scooter.
